# EUROPÄISCHE PATENTSCHRIFT

(11) **EP 0 893 063 B1**
(45) Veröffentlichungstag und Bekanntmachung des Hinweises auf die Patenterteilung: **09.01.2002**
(21) Anmeldenummer: 98112679.0
(22) Anmeldetag: 09.07.1998
(51) Int. Cl.: A22C 11/00

(54) **Esswurst, insbesondere Brat- oder Grillwurst, Vorrichtung sowie Verfahren zum Herstellen von darmlosen Esswürsten**
Method and device for making casingless sausages especially german or roast sausages
Procédé et dispositif pour la fabrication de saucisses sans peau en particulier de saucisses à rôtir ou à griller

(30) Priorität: 05.01.1998 DE 19800109; 05.01.1998 DE 29800043 U; 22.07.1997 DE 29712965 U
(43) Veröffentlichungstag der Anmeldung: 27.01.1999
(73) Patentinhaber: Breuko GmbH, Fleisch- und Wurstwarenvertrieb, 93437 Furth im Wald (DE)
(72) Erfinder: Breu, Andreas, 93437 Furth i.W. (DE); Kott, Hubert, 93458 Eschlkam (DE)
(74) Vertreter: Graf, Helmut, Dipl.-Ing.

(56) Entgegenhaltungen:
- EP-A- 0 511 619
- DE-A- 2 937 761
- DE-A- 4 032 574
- DE-B- 1 104 376
- DE-C- 814 715
- PATENT ABSTRACTS OF JAPAN vol. 015, no. 369 (C-0868), 18. September 1991 & JP 03 147736 A (HIGASHIMOTO KIKAI:KK), 24. Juni 1991

## Beschreibung

Die Erfindung bezieht sich auf eine Eßwurst gemäß Oberbegriff Patentanspruch 1, auf eine Vorrichtung gemäß Oberbegriff Patentanspruch 3 sowie auf ein Verfahren gemäß Oberbegriff Patentanspruch 9.

Bekannt sind Brat- oder Grillwürste unterschiedlichster Art, insbesondere auch Grillwürste in Schnecken- bzw. Spiralform, bei der eine lange Wurst mit der äußeren von einem Natur- oder Kunstdarm gebildeten Wursthaut und mit der von dieser umschlossenen Wurstmasse (Brät) zu einer Schnecke oder Spirale aufgewickelt ist, die dann durch Spießchen fixiert ist. Eine Vorrichtung zum Formen derartiger Würste ist aus der EP-A- 0511 619 bekannt.

Aufgabe der Erfindung ist es, eine Alternative zu den klassischen Eßwürsten, insbesondere zu den klassischen Brat- oder Grillwürsten aufzuzeigen.

Zur Lösung dieser Aufgabe ist eine Wurst entsprechend dem Patentanspruch 1 ausgebildet. Die erfindungsgemäße Wurst ist darmlos hergestellt, d.h. die Wurstmasse zusammenhaltende äußere Wursthaut besteht weder aus einem Naturdarm, noch aus einem Kunstdarm, sondern ist von der Wurstmasse selbst durch Modifizierung dieser Masse durch Brühen oder Erhitzen erzeugt. Die erfindungsgemäße Eßwurst ist bevorzugt eine Brat- oder Grillwurst.

Aufgabe der Erfindung ist es weiterhin auch, eine Vorrichtung aufzuzeigen, mit der in besonders einfache Weise die Herstellung von Würsten in unterschiedlichsten Formen möglich ist. Zur Lösung dieser Aufgabe ist eine Vorrichtung entsprechend dem Patentanspruch 3 ausgebildet.

Im einfachsten Fall erfolgt bei der erfindungsgemäßen Vorrichtung eine Relativbewegung zwischen die Abgabeöffnung und der Ablage, d.h. es wird beispielsweise die Ablage relativ zu der Abgabeöffnung bewegt oder aber die Abgabeöffnung relativ zur Ablage. Grundsätzlich sind selbstverständlich auch komplexere Bewegungen möglich, insbesondere Bewegungen der Abgabeöffnung in mehreren Achsrichtungen ggf. bei gleichzeitiger Bewegung der Ablage usw.

Bei einer möglichen Ausführungsform wird die wenigstens eine Abgabeöffnung von einer Abgabetülle gebildet, die an einer extruderartigen Wurstmaschine vorgesehen ist, oder aber die Abgabeöffnung ist von einem Formspalt zwischen zwei sich gegenläufig bewegenden Walzen vorgesehen. Ein Verfahren ist entsprechend dem Patentanspruch 9 ausgeführt.

Weiterbildungen der Erfindung sind Gegenstand der Unteransprüche. Die Erfindung wird im Folgenden anhand der Figuren an Ausführungsbeispiel näher erläutert. Es zeigen:
- Fig. 1: in vereinfachter Darstellung und in Draufsicht eine darmlose Grill- oder Bratwurst in Form einer Schnecke;
- Fig. 2: einen Schnitt entsprechend der Linie I - I der Figur 1;
- Fig. 3: in vereinfachter schematischer Darstellung eine Vorrichtung zum Herstellen von darmlosen Würsten gemäß der Erfindung;
- Fig. 4: in vereinfachter schematischer Darstellung eine weitere Vorrichtung zum Herstellen von darmlosen Würsten gemäß der Erfindung;
- Fig. 5: in vereinfachter Darstellung und in Draufsicht zwei Walzen der Vorrichtung der Fig. 4.

In den Figuren ist 1 eine Brat- oder Grillwurst, die ohne Darm aus einer Wurst-Masse bzw. Brät aus Fleischbasis hergestellt wurde. Darmlos im Sinne der Erfindung bedeutet, daß die äußere Hülle oder Haut 3 der Bratwurst 1 weder von einem Naturdarm, noch von einem Kunstdarm gebildet ist, sondern diese äußere Haut 3 durch entsprechende Modifizierung der Wurst-Masse, d.h. durch Brühen im heißen oder kochenden Wasser oder in Dampf aus der Masse 2 erzeugt ist. Wobei insbesondere das Eiweiß der Masse 2 an der Außenfläche der Wurst 1 die diese bzw. die Masse zusammenhaltende Haut 3 bildet. Zur Herstellung der Masse eignen sich die üblicherweise für Brat- oder Grillwürste verwendeten Fleischsorten, wie z.B. Rindfleisch und Schweinefleisch. Weiterhin enthält die Masse 2 die üblichen Zusätze und Gewürze.

Die Grillwurst 1 ist schnecken- oder spiralförmig ausgebildet, d.h. sie besteht aus einem langgestreckten Wurststrang, der zu der Schnecke zusammengerollt ist, wobei die Verbindung 4 zwischen benachbarten Windungen der Schnecke ebenfalls durch das auch die Haut 3 bildende Modifizieren der Masse 2, d.h. durch das Brühen im heißen bzw. kochenden Wasser und/oder in Wasserdampf erzeugt wird. Bevorzugt wird die schneckenförmige Grillwurst 1 so hergestellt, daß mit geeigneten Hilfsmitteln der Wurststrang extrudiert und zu der Schnecke auf einer Unterlage geformt wird, worauf dann das Brühen zur Bildung der Haut 3 und der Verbindung 4 zwischen den einzelnen Schneckengängen erfolgt.

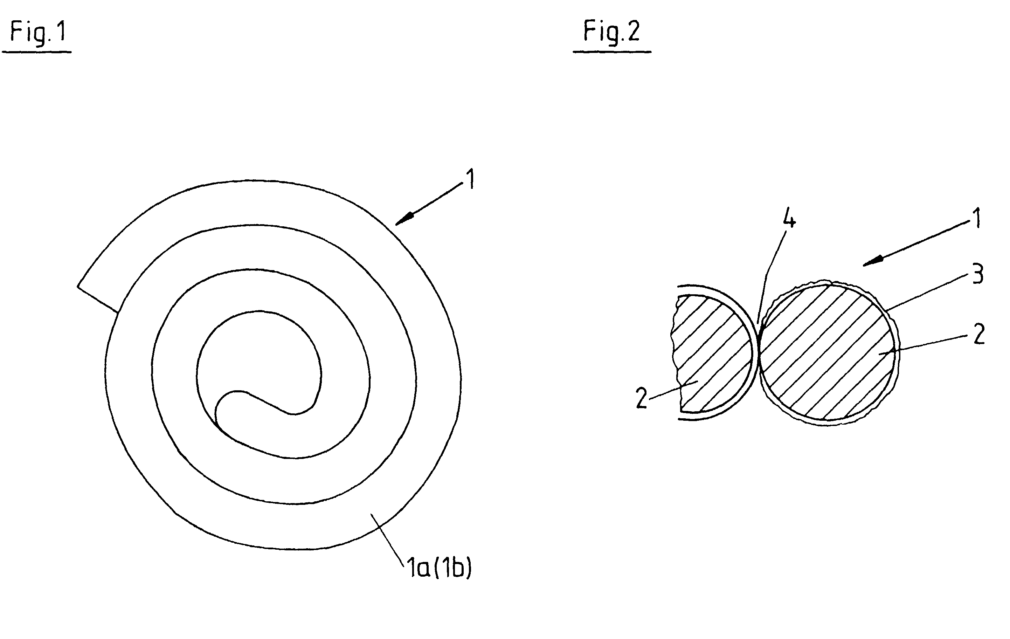

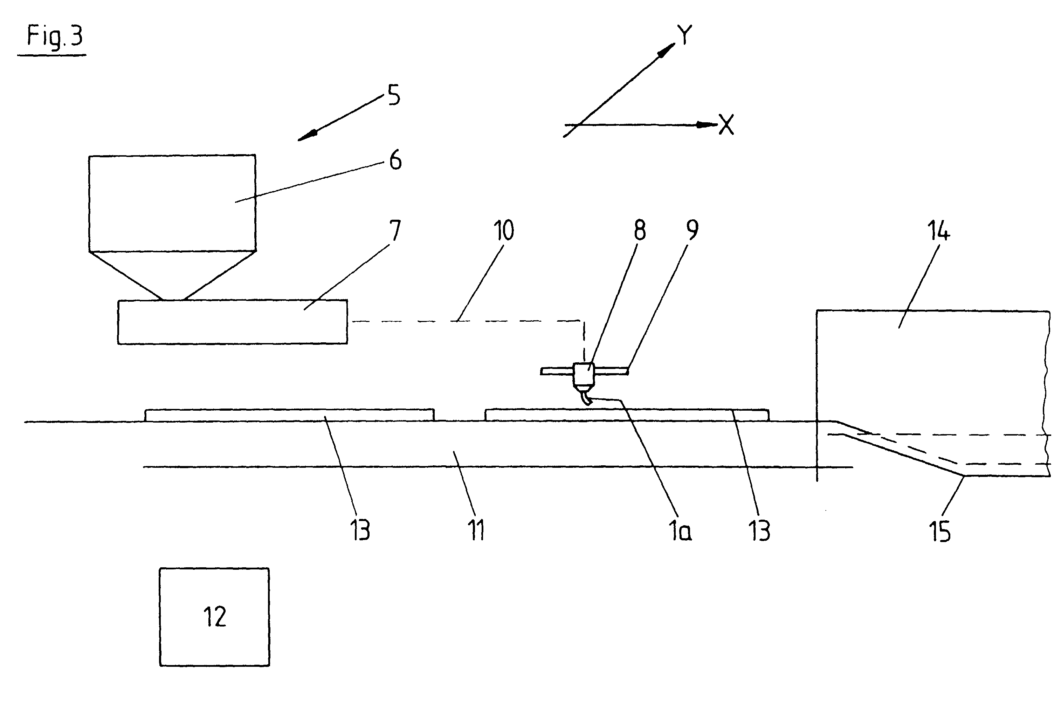

Die Figur 3 zeigt eine Vorrichtung zum Ausformen von Brät bzw. der Masse 2 ohne Darm, d.h. zum Herstellen von darmlosen Würsten. Die Vorrichtung 5 eignet sich u.a. zur Fertigung der Grillwurst 1 der Figuren 1 und 2. Die Vorrichtung 5 kann aber auch für die Herstellung anderer Wurstarten und/oder -Formen Verwendung finden.

Die Vorrichtung 5 besteht aus einem Aufgabetrichter 6 zum Einfüllen der Wurst-Masse (z.B. Brät). Der Aufgabetrichter 6 bildet den Einlaß zu einem beispielsweise einer Förderstrecke aufweisenden Extruder 7, dessen Auslaß bei der dargestellten Ausführungsform von einer Tülle 8 gebildet ist, die mittels einer Schlittenanordnung 9 in einer horizontalen Ebene in den beiden Achsen X und Y bewegbar ist. Die Tülle 8 ist über ein flexibles Abgaberohr 10 mit dem Extruder 7 verbunden und liegt mit ihrer nach unten gerichteten Tüllen- oder Abgabeöffnung etwas oberhalb eines Transporteurs 11, der beispielsweise von einem endlos umlaufend angetriebenen Förderband gebildet ist. Durch eine elektrische Steuereinrichtung 12 ist die Schlittenanordnung 9 bzw. deren Antrieb nach einem vorgewählten oder eingegebenen Programm steuerbar (z.B. CNC-gesteuert). Bei der dargestellten Ausführungsform steuert die Steuereinrichtung 12 auch den Antrieb des Extruders 7 und damit die Leistung dieses Extruders sowie den Antrieb des Transporteurs 11, d.h. das Ein- und Ausschalten des Transporteurs 11 und/oder dessen Geschwindigkeit, und zwar derart, daß der aus der Tülle 8 extrudierte Wurst-Strang 1a auf dem Transporteur 11 oder auf dort vorgesehenen Unterlagen 13, die beispielsweise Bleche sind, die gewünschte Wurstform bildet, beispielsweise die schneckenförmg eingerollte Grillwurst der Figuren 1 und 2, brezenförmige Würste, frikadellenartige Würste, geradlinige Würste usw.

An der Abgabetülle 8 ist vorzugsweise eine nicht dargestellte Trennvorrichtung vorgesehen, die ebenfalls von der Steuereinrichtung 12 gesteuert wird und die den extrudierten Wurststrang direkt an der Tülle 8 immer dann zertrennt und den Extrudiervorgang vorübergehend stoppt, wenn eine Wurst fertig geformt wurde.

Die geformten Wurststränge 1a oder Würste gelangen dann auf dem Transporteur 11 oder auf den Auflagen 13 zur Bildung der Haut 3 in einen Brühtunnel 14, in welchem die Würste 1a durch wenigstens ein Bad 15 mit heißen bzw. kochenden Wasser hindurchgeführt werden. Im Anschluß daran werden die hergestellten Würste je nach Wurstart weiteren Verarbeitungsschritten unterworfen, beispielsweise einem Räuchern, Reifen, Trocknen, Kühlen usw. Durch die Steuerung der Bewegung der Tülle 8 von der Steuereinrichtung 12 können mit ein und derselben Maschine in besonders einfacher Weise unterschiedlichste Formen für die darmlosen Würste erzeugt werden.

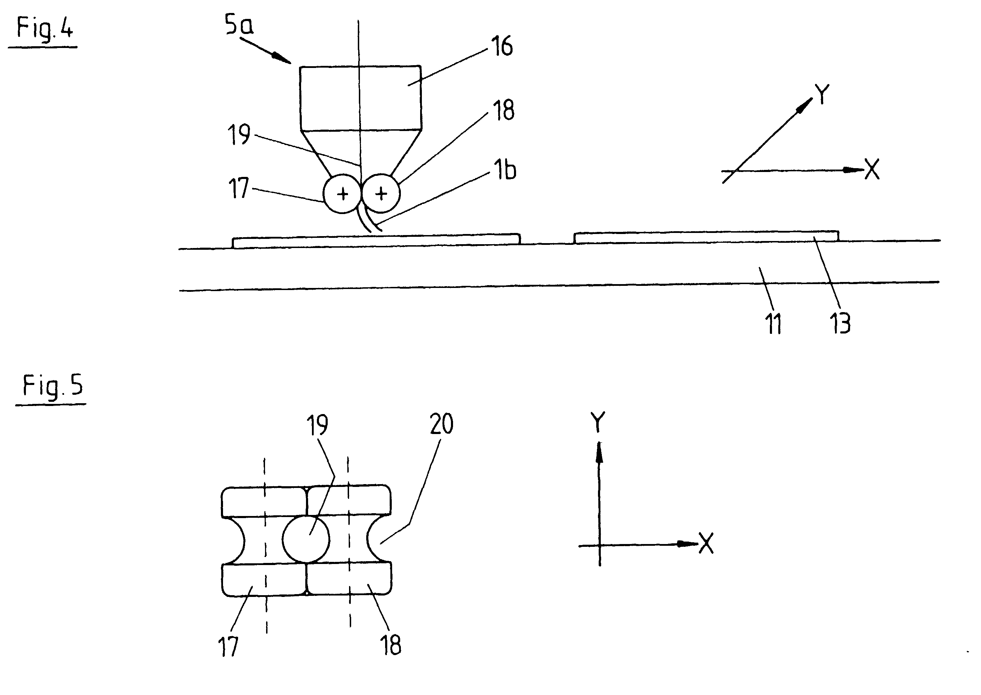

Die Figur 4 zeigt in einer sehr vereinfachten Darstellung als weitere mögliche Ausführungsform eine Vorrichtung 5a zum Herstellen von darmlosen Würsten. Bei dieser Vorrichtung 5a befindet sich ein Abgabetrichter 16 mit seiner Abgabeöffnung oberhalb des Transporteurs 11. Die Abgabeöffnung des Abgabetrichters 16 ist von zwei Walzen 17 und 18 gebildet, die gegenläufig derart angetrieben sind, daß sich beide Walzen im Bereich eines zwischen diesen Walzen gebildeten Formspaltes 19 aneinander abwälzen. Bei der dargestellten Ausführungsform ist der Formspalt 19 entsprechend der Figur 5 dadurch gebildet, daß die Walzen jeweils in der Mitte eine die Walzenachse konzentrisch umschließende und zum Walzenumfang hin offene Nut 20 aufweisen, wobei beide Nuten 20 den Formspalt 19 bilden.

Der Abgabetrichter 16 ist beispielsweise starr über dem Transporteur 11 angeordnet, so daß endlose oder aber abgetrennte, mit ihrer Längserstreckung in Transportrichtung des Transporteurs 11 orientierte Wurststränge 1b auf diesen Transporteur 11 1 oder auf dort vorgesehene Unterlagen 13 abgelegt werden. Grundsätzlich besteht auch hier die Möglichkeit, den Abgabetrichter 16 beweglich vorzusehen, und zwar zumindest in einer Achsrichtung quer zur Transportrichtung des Transporteurs, d.h. in der Y-Achse, so daß unter Berücksichtigung der Bewegung des Transporteurs 11 in der X-Achse der Wurststrang 1b in unterschiedlichsten Formen auf dem Transporteur 11 oder auf den dortigen Unterlagen 13 abgelegt werden kann.

Die Erfindung wurde voranstehend an Ausführungsbeispielen beschrieben. Es versteht sich, daß zahlreiche Änderungen sowie Abwandlungen möglich sind, ohne daß dadurch der der Erfindung zugrundeliegende Erfindungsgedanke verlassen wird. Bei den vorstehend beschriebenen Ausführungsbeispielen wurde davon ausgegangen, daß an den Vorrichtungen 5 und 5a jeweils lediglich eine Abgabeöffnung in Form der Abgabetülle 8 bzw. des Formspaltes 19 vorgesehen ist. Selbstverständlich ist es zur Steigerung der Leistung der jeweiligen Vorrichtung zweckmäßig, mehrere derartige Abgabeöffnungen vorzusehen, und zwar beispielsweise senkrecht oder quer zur Bewegungsrichtung des Transporteurs 11 nebeneinander, d.h. beispielsweise in Richtung der Y-Achse gegeneinander versetzt.

### Bezugszeichenliste

- 1: Bratwurst
- 1a, 1b: Wurststrang
- 2: Wurstmasse bzw. Brät
- 3: Wursthaut
- 4: Verbindungsbereich
- 5, 5a: Vorrichtung zum Herstellen von Würsten
- 6: Aufgabetrichter
- 7: Extruder
- 8: Abgabetülle
- 9: Schlittenanordnung
- 10: flexibles Abgaberohr
- 11: Transporteur
- 12: Steuereinrichtung
- 13: Unterlage
- 14: Brühtunnel
- 15: Bad
- 16: Aufgabe und Abgabetrichter
- 17, 18: Walze
- 19: Formspalt
- 20: Nut

## Patentansprüche

1. Wurst, insbesondere Grillwurst, wobei ein Wurststrang (1a, 1b) aus einer eiweiß- und/oder fleisch haltigen Wurstmasse (2) zu einer Schnecke, Spirale, Brezel oder zu einer anderen Wurstform geformt und in dieser Form fixiert ist, **dadurch gekennzeichnet, daß** die Wurst als darmlose Wurst mit einer von der Wurstmasse durch deren Modifizierung durch Wärme- oder Hitzebehandlung gebildeten Wursthaut (3) hergestellt ist, und daß die einzelnen, sich berührenden Windungen ebenfalls durch Modifizieren der Wurstmasse miteinander verbunden sind.

2. Wurst nach Anspruch 1, **dadurch gekennzeichnet, daß** die Wurstmasse (2) auf Fleischbasis, beispielsweise unter Verwendung von Schweine- oder Rindfleisch hergestellt ist.

3. Vorrichtung zum Herstellen von darmlosen Eßwürsten aus einer Eiweiß und/oder Fleisch enthaltenden Wurstmasse (2), **gekennzeichnet durch** eine Ablage (13), die unter wenigstens einer Abgabeöffnung zur Erzeugung eines Stranges aus einer Wurstmasse angeordnet ist, sowie **durch** Mittel (9) zum motorischen Erzeugen einer Relativbewegung zwischen der Abgabeöffnung und der Ablage, um auf der Ablage frei liegend einen Wurststrang zu formen, und **durch** eine Einrichtung (14) zum Wärme- oder Hitzebehandeln bzw. zum Brühen der hergestellten Wurststränge (1a, 1b) zum Erzeugen der Wursthaut und der Verbindung zwischen den Windungen der Wurststränge (1a, 1b).

4. Vorrichtung nach Anspruch 3, **dadurch gekennzeichnet, daß** die Abgabeöffnung in wenigstens einer parallel zur Ablage verlaufenden Achsrichtung (X-Achse, Y-Achse) motorisch bewegbar ist,
und zwar vorzugsweise in zwei senkrecht zueinander verlaufenden und eine Ebene parallel zur Ablage definierenden Achsrichtungen (X-Achse, Y-Achse).

5. Vorrichtung nach einem der vorhergehenden Ansprüche, **gekennzeichnet durch** eine elektrische oder elektronische Steuereinrichtung (12) zum Steuern der Bewegung der wenigstens einen Abgabeöffnung (8).

6. Vorrichtung nach einem der vorhergehenden Ansprüche, **dadurch gekennzeichnet, daß** die Ablage von einem Transporteur (11) oder von an einem Transporteur vorgesehenen Ablagen (13) gebildet ist.

7. Vorrichtung nach einem der vorhergehenden Ansprüche, **gekennzeichnet durch** eine beispielsweise von einem Brühtunnel gebildete Einrichtung (14) zum Wärme- oder Hitzebehandeln oder zum Brühen der hergestellten Wurststränge (1a, 1b) zum Erzeugen der Wursthaut.

8. Vorrichtung nach einem der vorhergehenden Ansprüche, **dadurch gekennzeichnet,**
**daß** mehrere Abgabeöffnungen (8) vorgesehen sind,
und/oder daß die wenigstens eine Abgabeöffnung (8) der Auslaß einer extruderartigen Wurst-Maschine ist,
und/oder daß die wenigstens eine Abgabeöffnung (8) über ein flexibles Abgaberohr (10) mit einer extruderartigen Wurstmaschine verbunden ist,
und/oder daß die wenigstens eine Abgabeöffnung von einem Formspalt (19) zwischen wenigstens zwei gegenläufig angetriebenen Walzen (17, 18) gebildet ist, vorzugsweise von zwei gegenläufig angetriebenen Walzen an einem Abgabetrichter (16).

9. Verfahren zur Herstellung einer Eßwurst, insbesondere Grillwurst, bei dem ein Wurststrang (1a, 1b) aus einer eiweiß- und/oder fleischhaltigen Wurstmasse (2) zu einer zu einer Schnecke, Spirale, Brezel oder einer anderen Wurstform geformt und in dieser Form fixiert wird, **dadurch gekennzeichnet, daß** die Wurst als darmlose Wurst aus der Wurstmasse geformt wird, und daß die Bildung einer Wursthaut (3) sowie das Verbinden der einzelnen Windungen jeweils durch Modifizierung der Wurstmasse durch Hitze- oder Dampfbehandlung erfolgen.

10. Verfahren nach Anspruch 9, **dadurch gekennzeichnet, daß** das Formen der Wurstform frei auf einer Unterlage erfolgt,
und/oder daß das Verbinden der einzelnen Windungen der Eßwurst (1) gleichzeitig mit der Herstellung der Wursthaut (3) erfolgt,
und/oder daß als Wurstmasse eine solche auf Fleischbasis, beispielsweise unter Verwendung von Schweine- oder Rindfleisch hergestellte Wurstmasse verwendet wird.

11. Verfahren nach einem der vorhergehenden Ansprüche, **dadurch gekennzeichnet, daß** das Modifizieren der Wurstmasse zur Bildung der Wursthaut und zum Verbinden der einzelnen Windungen durch eine Wärme- oder Hitzebehandlung, beispielsweise in heißem oder kochenden Wasser oder in Wasserdampf erfolgt.

## Claims

1. Sausage, in particular grilling sausage, a sausage strand (1a, 1b) made from a protein-containing and/or meat-containing sausage mixture (2) being formed into a coil, spiral, pretzel or other sausage shape and being fixed in this shape, **characterized in that** the sausage is produced as a casingless sausage with a sausage skin (3) formed from the sausage mixture by its modification by thermal or heat treatment, and **in that** the individual turns touching one another are interconnected likewise by modification of the sausage mixture.

2. Sausage according to Claim 1, **characterized in that** the sausage mixture (2) is produced on a meat basis, using for example pork or beef.

3. Device for producing casingless eating sausages made from a sausage mixture (2) containing protein and/or meat, **characterized by** a support (13) which is arranged below at least one delivery opening for forming a strand made from a sausage mixture, and also by means (9) for motorized generation of a relative movement between the delivery opening and the support, in order to shape a sausage strand lying freely on the support, and by an arrangement (14) for thermal or heat treatment or for scalding of the sausage strands (1a, 1b) produced, so as to form the sausage skin and the connection between the turns of the sausage strands (1a, 1b).

4. Device according to Claim 3, **characterized in that** the delivery opening can be moved in a motorized manner in at least one axis direction (x axis, y axis) running parallel to the support, and in particular preferably in two axis directions (x axis, y axis) running perpendicularly to one another and defining a plane parallel to the support.

5. Device according to one of the preceding claims, **characterized by** an electric or electronic control arrangement (12) for controlling the movement of the at least one delivery opening (8).

6. Device according to one of the preceding claims, **characterized in that** the support is formed by a conveyor (11) or by supports (13) provided on a conveyor.

7. Device according to one of the preceding claims, **characterized by** an arrangement (14), formed by for example a scalding tunnel, for thermal or heat treatment or for scalding of the sausage strands (1a, 1b) produced, so as to form the sausage skin.

8. Device according to one of the preceding claims, **characterized in that** a number of delivery openings (8) are provided, and/or **in that** the at least one delivery opening (8) is the outlet of an extruder-like sausage machine, and/or **in that** the at least one delivery opening (8) is connected to an extruder-like sausage machine via a flexible delivery tube (10), and/or **in that** the at least one delivery opening is formed by a shaping gap (19) between at least two rollers (17, 18) driven in opposite directions, preferably by two rollers driven in opposite directions on a delivery hopper (16).

9. Method for producing an eating sausage, in particular a grilling sausage, in which a sausage strand (1a, 1b) made from a protein-containing and/or meat-containing sausage mixture (2) is formed into a coil, spiral, pretzel or other sausage shape and is fixed in this shape, **characterized in that** the sausage is shaped from the sausage mixture as a casingless sausage, and **in that** the formation of a sausage skin (3) and the connection of the individual turns are each effected by modification of the sausage mixture by heat or steam treatment.

10. Method according to Claim 9, **characterized in that** the formation of the sausage shape is effected freely on a support, and/or **in that** the connection of the individual turns of the eating sausage (1) takes place simultaneously with the production of the sausage skin (3), and/or **in that** a sausage mixture produced on a meat basis, using for example pork or beef, is used as the sausage mixture.

11. Method according to one of the preceding claims, **characterized in that** the modification of the sausage mixture for forming the sausage skin and for connecting the individual turns is effected by thermal or heat treatment, for example in hot or boiling water or in steam.

## Revendications

1. Saucisse, et notamment saucisse à griller, un cordon de saucisse (1a, 1b) étant formé à partir d'une masse de saucisse (2) contenant des blancs d'oeuf et/ou de la viande, en colimaçon, en spirale, en bretzel ou en une autre forme de saucisse, cette forme étant fixée, et **caractérisée en ce que** la saucisse a été fabriquée sous la forme d'une saucisse sans boyau avec peau (3) constituée par modification de la masse de saucisse sous l'effet d'un traitement thermique, et **en ce que** les différentes spires qui se touchent sont reliées les unes aux autres par modification de la masse de saucisse.

2. Saucisse selon la revendication 1, **caractérisée en ce que** la masse de saucisse (2) est fabriquée à partir de viande, en utilisant par exemple de la viande de porc ou de boeuf.

3. Dispositif pour la fabrication de saucisses sans boyau à partir d'une masse de saucisse (2) contenant des blancs d'oeuf et / ou de la viande, **caractérisé par** un dépôt (13) situé sous au moins un orifice d'évacuation en vue de produire un cordon à partir d'une masse de saucisse, par des moyens (9) destinés à produire un mouvement relatif entraîné par moteur entre l'orifice d'évacuation et le dépôt, de manière à former un cordon de saucisse reposant librement sur le dépôt, et par une installation (14) pour le traitement thermique, l'ébouillantage des cordons de saucisse (1a, 1b) fabriqués et la production de la peau et de la liaison entre les spires des cordons de saucisse (1a, 1b).

4. Dispositif selon la revendication 3, **caractérisé en ce que** l'orifice d'évacuation peut être déplacée par un moteur dans au moins une direction axiale (axe des X, axe des Y) parallèle au dépôt,
et de préférence deux directions axiales (axe des X, axe des Y) perpendiculaires l'une par rapport à l'autre et définissant un plan parallèle au dépôt.

5. Dispositif selon une des revendications précédentes, **caractérisé par** une installation de commande (12) électrique ou électronique destinée à diriger le mouvement d'au moins un orifice d'évacuation (8).

6. Dispositif selon une des revendications précédentes, **caractérisé en ce que** le dépôt est constitué par un convoyeur (11) ou par des dépôts (13) sur un convoyeur (13).

7. Dispositif selon une des revendications précédentes, **caractérisé par** une installation (14) formée par exemple par un tunnel d'ébouillantage et destinée au traitement thermique ou à l'ébouillantage des cordons de saucisse (1a, 1b) en vue de produire 1a peau.

8. Dispositif selon une des revendications précédentes, **caractérisé en ce que** plusieurs orifices d'évacuation (8) sont prévus et / ou **en ce que** au moins un orifice d'évacuation (8) est la sortie d'une machine à fabriquer la saucisse de type extrudeuse, et / ou **en ce qu'**au moins un orifice d'évacuation (8) est relié à une machine à fabriquer la saucisse de type extrudeuse,
et / ou **en ce que** au moins un orifice d'évacuation (8) est la sortie d'une machine à fabriquer la saucisse de type extrudeuse,
et / ou **en ce que** au moins un orifice d'évacuation (8) est relié à une machine à fabriquer la saucisse de type extrudeuse via un tuyau d'évacuation flexible et / ou **en ce qu'**au moins un orifice d'évacuation est formé par un interstice profilé (19) entre au moins deux tambours (17, 18) à mouvement contraire, et de préférence par deux tambours à mouvement contraire disposés contre un entonnoir d'évacuation (16).

9. Procédé de production d'une saucisse, et notamment d'une saucisse à griller, un cordon de saucisse (1a, 1b) étant formé à partir d'une masse de saucisse (2) contenant des blancs d'oeuf et/ou de la viande, en colimaçon, en spirale, en bretzel ou en une autre forme de saucisse, cette forme étant fixée, et **caractérisé en ce que** la saucisse se présente sous la forme d'une saucisse sans boyau constituée à partir de la masse de saucisse et **en ce que** la formation d'une peau et la liaison entre les différentes spires sont assurées par modification de la masse de saucisse sous l'effet d'un traitement thermique ou par vapeur.

10. Procédé selon la revendication 9, **caractérisé en ce que** la saucisse est formée librement sur une base et / ou **en ce que** la liaison entre les différentes spires de la saucisse (1) est simultanée avec la production de la peau (3),
et / ou **en ce que** une masse de saucisse constituée à base de viande, en utilisant par exemple de la viande de porc ou de boeuf, est utilisée.

11. Procédé conforme à l'une des revendications précédentes, **caractérisé en ce que** la modification de la masse de saucisse en vue de former la peau et la liaison entre les différentes spires ont lieu par traitement thermique, par exemple dans de l'eau chaude ou bouillante ou dans la vapeur d'eau.
